Europäisches Patentamt

European Patent Office

Office européen des brevets

(11) Publication number: **0 443 751 A2**

# EUROPEAN PATENT APPLICATION

(21) Application number: 91300974.2

(22) Date of filing: 06.02.91

(51) Int. Cl.5: **H01S 3/093**

(30) Priority: 23.02.90 JP 44087/90

(43) Date of publication of application:
28.08.91 Bulletin 91/35

(84) Designated Contracting States:
DE FR GB

(71) Applicant: ISHIKAWAJIMA-HARIMA JUKOGYO
KABUSHIKI KAISHA
2-1, Ote-machi 2-chome
Chiyoda-ku Tokyo 100(JP)

(72) Inventor: Taniu, Yoshito
No.1-8-1, Yumemino, Matsubushi-machi
Kitakatsushika-gun, Saitama-ken 34301(JP)
Inventor: Shono, Mikinori
No.3-8-3802-105, Shiomidai, Isogo-ku
Yokohama-shi, Kanagawa-ken 235(JP)

(74) Representative: Jennings, Nigel Robin et al
KILBURN & STRODE 30 John Street
London WC1N 2DD(GB)

(54) Solid lasers.

(57) A solid laser device comprises an elliptical beam collector (13) in which a solid laser medium (11) and a beam source (12) for excitation of the laser medium are mounted. A wavelength selective reflection film (14) on one or both of the outer and inner surfaces of the beam collector (13) reflects beams with wavelengths effective for excitation of the laser medium onto the laser medium and transmits beams with other wavelengths outside the beam collector. A beam shield (15) outside the beam collector (13) absorbs the beams transmitted outside the beam collector. A wavelength conversion filter (21) extends within the beam collector (13) around the laser medium (11) and converts beams with wavelengths not effective for the excitation into beams with wavelengths effective for the excitation.

# Fig. 3

EP 0 443 751 A2

The present invention relates to solid lasers in which beams from an excitation source are collected in a solid laser medium.

Laser beams, which are coherent and advantageously homogeneous in wavelength, have been used in various scientific and technological fields. Among various known types of laser are solid lasers; for instance, ruby lasers and YAG lasers are well known in the art.

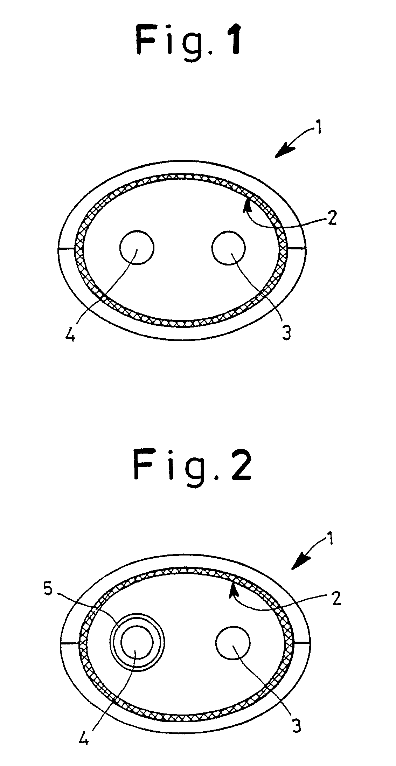

A known solid laser device for generating laser beams comprises a beam collector with a solid laser medium and an excitation beam source mounted therein for directing the beams from the source into the laser medium for excitation. Figures 1 and 2 are schematic views of such known lasers in which, in order to enhance the excitation efficiency, the inner surface of the beam collector 1 is plated with gold or silver to define a reflection surface 2 which reflects all the beams from the excitation beam source 3 to direct the same into the laser medium 4. In addition to the gold or silver plated reflection surface 2, the laser medium 4 may be surrounded by a wavelength selective filter 5, as shown in Figure 2, so that only beams with wavelengths effective for the excitation can be transmitted through the filter 5 and collected in the laser medium 4.

When all the beams from the source 3 are collected in the medium 4 in the beam collector 1, as shown in Figure 1, only some of the collected beams have wavelengths effective for the excitation and the remainder have ineffective wavelengths therefor. The laser medium 4 is thus subjected to a thermal load due to such ineffective beams and therefore has a thermal lens effect which is an obstacle when high output of the laser and/or single transverse mode is desired.

The thermal load on the medium 4 will also adversely affect the excitation beam source 3 and shorten its life.

When the laser medium 4 is within a filter 5, as shown in Figure 2, the medium 4 itself is not subjected to a thermal load due to ineffective beams. However, the filter 5 is thermally loaded which results in a substantial deterioration in its transmissivity to the beams to be collected in the medium 4.

The object of the present invention is to provide a solid laser device in which the above problems are avoided and in which, in particular, only radiation whose wavelength is effective for excitation of the laser medium impinges on the laser medium whereby the excitation efficiency is enhanced. It is a further object of the invention to provide a solid laser device in which that radiation from the excitation source whose wavelength is ineffective for the excitation is converted into radiation having an effective wavelength whereby further enhancing the excitation efficiency.

In accordance with the present invention a solid laser device comprises a cylindrical beam collector in which are disposed a solid laser medium and a beam source for excitation of the laser medium and is characterised by a wavelength selective reflection film on at least one of the outer and inner surfaces of the beam collector for reflecting beams with wavelengths effective for excitation of a laser medium and transmitting beams with other wavelengths and by a beam shield outside the beam collector and the reflection film(s) for absorbing the beams transmitted outside the beam collector and reflection film(s).

The laser device preferably also includes a wavelength conversion filter within the beam collector around the laser medium for converting beams with wavelengths not effective for the excitation into beams with wavelengths effective for the excitation.

Thus the laser of the present invention has a wavelength selective reflection film on at least one of the inner and outer surfaces of the beam collector and a beam shield outside the beam collector which results in only beams with wavelengths effective for excitation of a laser medium being reflected and directed to the laser medium whilst beams with wavelengths not effective for the excitation are absorbed by the beam shield so that the thermal load on the laser medium and on the excitation source itself is decreased. As a result, a high output of the laser can be attained, the single transverse mode can be used and a long service life of the excitation source can be ensured.

If a wavelength conversion filter is disposed outside the laser medium within the beam collector, those beams with wavelengths ineffective for excitation of the laser medium which would have reached the laser medium are converted into beams with wavelengths effective for the excitation, whereby the excitation efficiency is further enhanced.

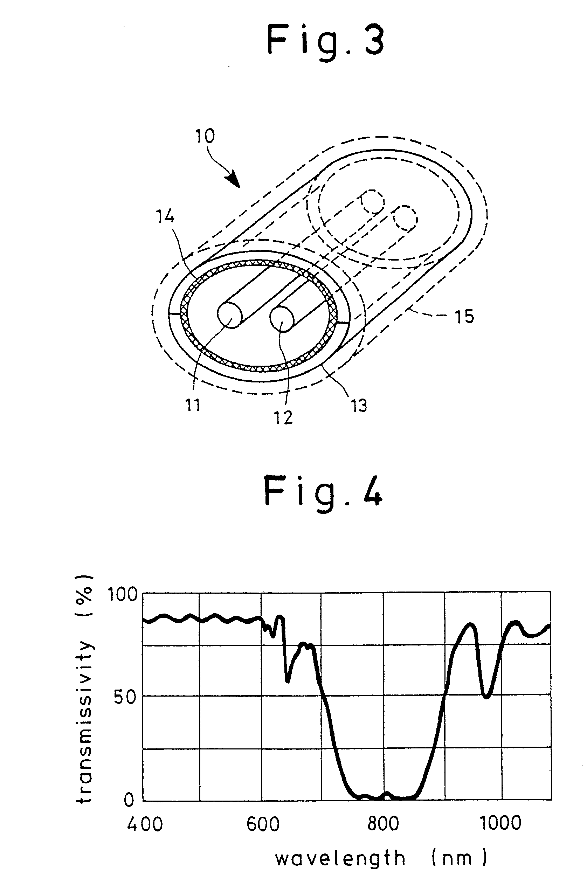

Further features and details of the invention will be apparent from the following description of certain specific embodiments which is given by way of example with reference to Figures 3 to 9 of the accompanying drawings, in which:

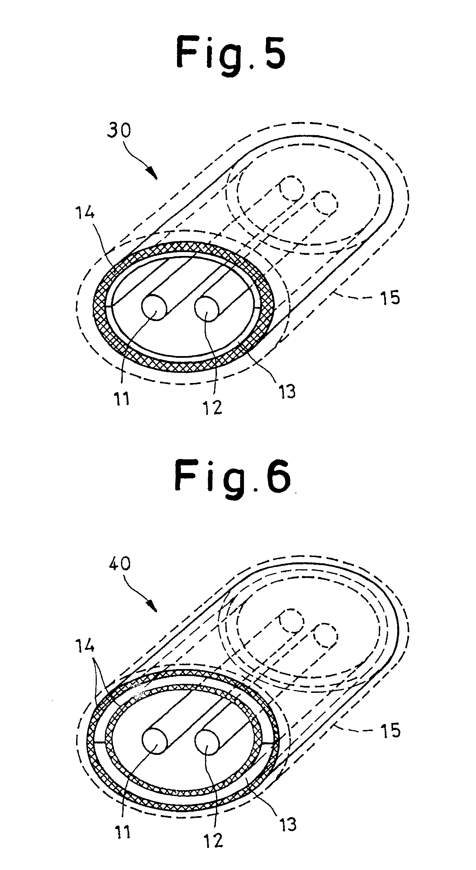

Figure 3 is a schematic perspective view of a first embodiment of the present invention; Figure 4 is a graph illustrating the transmissivity characteristic of a wavelength selective reflection film as used in the present invention; and Figures 5 to 9 are views similar to Figure 3 of second to sixth embodiments of the present invention, respectively.

Referring firstly to Figure 3, a solid laser device 10 comprises a cylindrical beam collector 13 which contains a solid laser medium 11 and a beam source 12 for exciting the medium 11. The beam collector 13 is substantially elliptical and the laser medium 11 and beam source 12 are themselves cylindrical and lie substantially on respective foci of the ellipse. Shapes other than elliptical may be used for the beam collector and all that is important is that the radiaton from the beam source is substantially reflected onto the laser medium. The solid laser medium 11 will emit photons when subjected to excitation beams from the beam source 12 and may be made of, for example, ruby or YAG.

The beam source 12 emits the excitation beams and may be a xenon lamp or a tungsten-iodine lamp depending on the solid laser medium 11.

The beam collector 13 is designed and constructed to efficiently direct the beams from the beam source 12 into the laser medium 11, thereby exciting the medium 11.

The beam collector 13, which comprises a substrate having an inner surface carrying a reflection film 14, is preferably made of quartz; alternatively, it may be made of, for example, borosilicate glass.

The reflection film 14 serves to reflect beams with wavelengths effective for excitation of the laser medium 11 from the beam source 12, which wavelengths are different depending upon the type of laser medium 11 and the type of beam source 12, and transmits beams, such as near infrared beams, which are ineffective or harmful to excitation of the medium 11, to the exterior.

The reflection film 14 comprises a dielectric laminated film which may be made of $SiO_2$ or $TiO_2$. The thickness of the film 14 and the number of the laminated sheets are set depending upon the required transmissivity characteristic whcih in turn depends on the type of the laser medium 11 and the type of the excitation beam source 12.

For example, in a Nd:YAG laser, a reflection film is used which exhibits the transmissivity characteristic shown in Figure 4 with the centre of the reflection being near the Nd absorption spectrum of about 810 nm.

The beam collector 13 is surrounded by a beam shield 15 which has a low degree of reflectivity as a result of treatment, e.g. aluminization to mat black. The shield 15 shields the beams which are harmful to the excitation and which have been transmitted outside the beam collector 13 through the reflection film 14 and absorbs and cools them. The beam shield may be of the known type through which, in use, water or other cooling medium flows in order to cool it.

Upon operation of the solid laser device 10, those beams from the source 12 which are effective for excitation of the laser medium 11 are reflected by the reflection film 14 and collected in the laser medium 11 while those beams with wavelengths harmful to the excitation are transmitted through the reflection film 14 and beam collector 13 into the low-reflectivity shield 15 where they are absorbed and cooled.

Thus, only the beams with the wavelengths effective for excitation of the laser medium 11 are entrapped within the beam collector 13 whereby the excitation efficiency is enhanced. Furthermore, these beams with wavelengths harmful to the excitation, for example near infrared beams, are discharged outside the beam collector 13 so that the thermal load on the laser medium 11 and excitation beam source 12 is reduced. As a consequence, a high output can be attained, single transverse mode can be used and a long service life of the excitation beam source 12 is ensured.

Furthermore the thermal load accumulated on the beam collector 13 is reduced thereby improving the durability and service life of the reflection film 14.

In the following description of the embodiments of Figures 5 to 9, the same reference numerals are used to designate parts similar to those in Figure 3. Such parts will not be described again.

In the laser 30 of the second embodiment shown in Figure 5 the reflection film 14 is disposed outside the beam collector 13.

In use, beams with wavelengths effective for excitation of the laser medium 11 are transmitted through the beam collector 13 and then reflected back by the reflection film 14 so that they are transmitted again through the beam collector 13 and then collected in the laser medium 11. On the other hand, beams with wavelengths harmful to the excitation are transmitted through the beam collector 13 and reflection film 14 into the beam shield 15 where they are absorbed and cooled.

Thus only the beams with wavelengths effective for excitation of the laser medium 11 are entrapped within the beam collector 13 thereby enhancing the excitation efficiency. Furthermore, as in the case of the laser 10 described above, a high output can be attained, single transverse mode can be attained and a long life of the excitation beam source 12 is ensured.

In the third embodiment illustrated in Figure 6, the solid laser device 40 has two reflection films 14, respectively disposed on the outer and inner surfaces of the beam collector 13.

When the solid laser device 40 is operated, a proportion of those beams which are effective for excitation of the laser medium 11 are reflected back by the inner reflection film 14 to be collected in the laser medium 11. The remainder of the beams with wavelengths effective for the excitation and which were not reflected by the inner reflection film 14 but were transmitted through the inner film 14 and beam collector 13, are reflected back by the outer reflection film 14 and transmitted through the beam collector 13 and inner reflection film 14 into the laser medium 11.

On the other hand, beams which are harmful to excitation of the laser medium 11 are transmitted through the inner reflection film 14, beam collector 13 and outer reflection film 14 into the beam shield 15 where they are absorbed and cooled.

The same effects and advantages are thus obtained as in the previous embodiments.

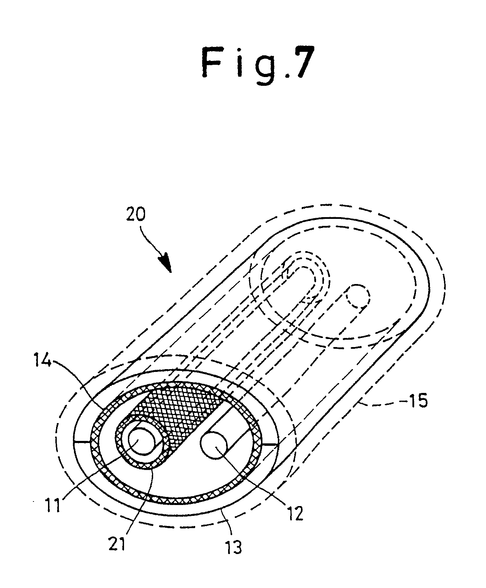

In the solid laser device 20 of the fourth embodiment ilustrated in Figure 7, a wavelength conversion filter 21 surrounds the solid laser medium 11 which is mounted in the beam collector 13, as before. The conversion filter 21 is in the form of a hollow cylinder surrounding the cylindrical laser medium 11.

The wavelength conversion filter 21 serves to convert those beams which are produced by the source 12 and directly or indirectly directed to the laser medium 11 and which have wavelengths harmful to the excitation into beams with wavelengths effective for the excitation. The wavelengths of the beams to be converted will depend upon the kind of the laser medium 11 and the type of the excitation beam source 12.

For instance, in a Nd:YAG laser, the wavelengths effective for the excitation are those adjacent to the Nd absorption spectrum of 810 nm. Other beams which are harmful to the excitation may be ultraviolet beams and near infrared beams. The filter 21 which may be doped with Sm (samarium) or Ho (holmium), receives that proportion of these beams which would have reached the laser medium and discharges them converted into beams with wavelengths effective for the excitation.

In other respects the fourth embodiment is similar to the solid laser device 10 described above and the same effects and advantages are obtained though the excitation efficiency is further enhanced.

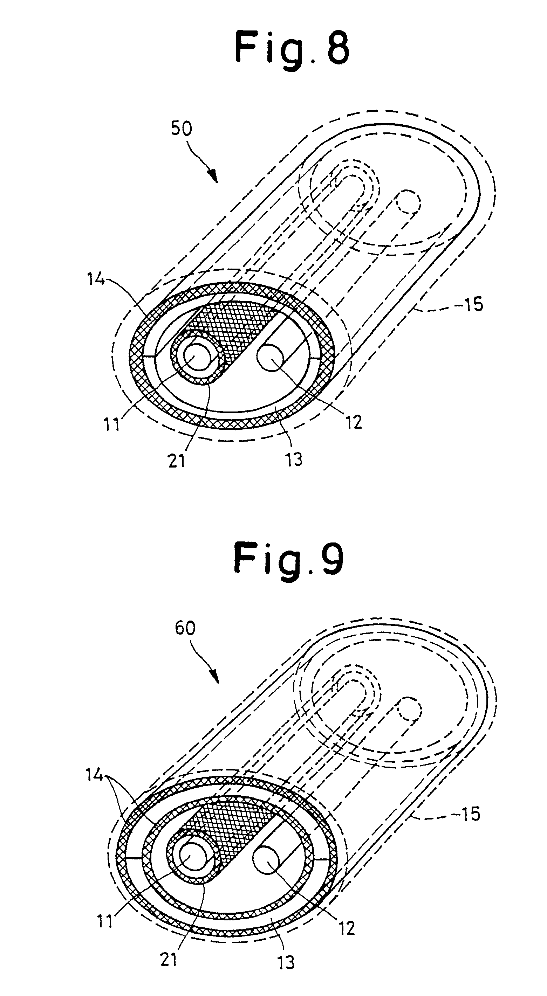

The solid laser device 50 of the fifth embodiment shown in Figure 8 is substantially similar to the solid laser device 20 of the fourth embodiment except that the wavelength selective film 14 is not on the inner surface but on the outer surface of the beam collector 13. Substantially the same features and advantages as those of the solid laser device 20 are obtained.

The solid laser device 60 of the sixth embodiment shown in Figure 9 is substantially similar to the laser device 20 of the fourth embodiment except that wavelength selective films 14 are disposed on both the inner and outer surfaces of the beam collector 13. The laser 60 has substantially the same features and advantages as those of the laser 20 described above.

As is clear from the foregoing description, in the present invention, a wavelength selective reflection film is disposed on at least one of the inner and outer surfaces of a cylindrical beam collector which is surrounded by a beam shield. It follows therefore that only radiation with wavelengths effective for excitation of the solid laser medium is reflected and collected by the laser medium and that radiation with wavelengths harmful to excitation of the laser medium is absorbed by the shield so that the thermal load on the laser medium and the exitation source itself is reduced.

In addition, a wavelength conversion filter is preferably disposed outside of the laser medium within the beam collector so that radiation with wavelengths effective for excitation of the laser medium is reflected by the reflection film and collected by the laser medium and radiation with wavelengths harmful to the excitation is converted into radiation with wavelengths effective for the excitation, thereby further enhancing the excitation efficiency.

**Claims**

1. A solid laser device comprising a cylindrical beam collector (13) in which are disposed a solid laser medium (11) and a beam source (12) for excitation of the laser medium, characterised by a wavelength selective reflection film (14) on at least one of the outer and inner surfaces of the beam collector (13) for reflecting beams with wavelengths effective for excitation of the laser medium and transmitting beams with other wavelengths and by a beam shield (15) outside the beam collector (13) and the reflection film(s) (14) for absorbing the beams transmitted outside the beam collector (13) and reflection film(s).

2. A device as claimed in claim 1, characterised by a wavelength conversion filter (21) extending within the beam collector (13) around the laser medium (11) for converting beams with wavelengths not effective for the excitation into beams with wavelengths effective for the excitation.

# Fig.1

# Fig.2

# Fig. 3

# Fig. 4

# Fig.5

# Fig.6

# Fig.7

# Fig. 8

# Fig. 9